# EUROPÄISCHE PATENTANMELDUNG

(11) **EP 1 559 532 A1**
(43) Veröffentlichungstag der Anmeldung: **03.08.2005**
(21) Anmeldenummer: 04405050.8
(22) Anmeldetag: 27.01.2004
(51) Int. Cl.: B29C 70/30, B29C 33/52, C22C 13/02

(54) **Verfahren zur Herstellung von faserverstärkten Kunststoffteilen und vorrichtung dazu**

(71) Anmelder: Alcan Technology & Management AG, 8212 Neuhausen am Rheinfall (CH)
(72) Erfinder: Burbach, Thomas, 8200 Schaffhausen (CH); Henne, Markus, 820 Schaffhausen (CH)

(57) **Zusammenfassung**

Die Erfindung betrifft ein Verfahren zur Herstellung eines faserverstärkten, insbesondere langfaserverstärkten, Kunststoffteils mittels Kernausschmelztechnik, wobei wenigstens ein Schmelzkern aus einer Metalllegierung in ein Formwerkzeug eingelegt und mit Verstärkungsfasern sowie einer die Verstärkungsfasern umgebenden Kunststoffmatrix ummantelt wird, und die Kunststoffmatrix verfestigt und das formstabile Kunststoffteil anschliessend entformt und der Schmelzkern ausgeschmolzen wird. Die Erfindung zeichnet sich dadurch aus, dass der Schmelzkern im Anschluss an das Entformen ausgeschmolzen und das Kunststoffteil getempert wird, wobei die thermische Energie im Kunststoffteil und im Schmelzkern vom jeweils vorangehenden Prozessschritt im wesentlichen erhalten und in den nächsten Prozessschritt mitgeführt wird. Ferner umfasst die Erfindung einen Schmelzkern zur Herstellung von faserverstärkten Kunststoffteilen im Schmelzkernverfahren bestehend aus einer Metallegierung enthaltend Bismut (Bi) und Zinn (Sn), wobei die Legierung als weiteren Legierungsbestandteil Antimon (Sb) enthält.

## Beschreibung

Vorliegende Erfindung betrifft ein Verfahren zur Herstellung eines faserverstärkten, insbesondere langfaserverstärkten, Kunststoffteils mittels Kernausschmelztechnik, wobei wenigstens ein Schmelzkern aus einer Metalllegierung in ein Formwerkzeug eingelegt und mit Verstärkungsfasern und einer die Verstärkungsfasern umgebenden Kunststoffmatrix ummantelt wird, und die Kunststoffmatrix verfestigt und das formstabile Kunststoffteil anschliessend entformt und der Schmelzkern ausgeschmolzen wird.

Die Erfindung umfasst zudem eine Vorrichtung zur Ausführung des Verfahrens. Ferner betriff die Erfindung auch eine Schmelzkern-Legierung zur Herstellung von Kunststoffteilen mittels Kernausschmelztechnik.

Die Kernausschmelztechnik ist ein bekanntes Verfahren zur Herstellung von Körpern aus Kunststoff, bei welchem ein Schmelzkern in die Kavität einer Formpresse gelegt, mit Kunststoff und Fasergebilden ummantelt und der Kunststoff verfestigt bzw. ausgehärtet wird. Anschliessend wird der Kern ausgeschmolzen und der Wiederverwertung zugeführt.

Die Schmelzkerne werden in der Regel in Giessformen in die gewünschte Form gegossen. Hierzu kann in einem geschlossenen Stoffkreislauf ausgeschmolzenes Kernmaterial, gegebenenfalls nach einer Zwischenreinigung, wieder zu Schmelzkernen vergossen werden.

Bekannte Schmelzkerne bestehen z.B. aus einer niedrigschmelzenden SnBi-Metalllegierung. So befasst sich die WO 96/26799 und die DE 37 24 665 A1 mit Schmelzkernen aus BiSn-Legierungen, welche bei rund 138° C ausschmelzen. Da der ausgehärtete Kunststoffmantel des Kunststoffteils eine deutlich höhere Schmelz- bzw. Zersetzungstemperatur aufweist als die Schmelztemperatur des Schmelzkerns, kann der Kernausschmelzvorgang ohne nachteilige Folgen für das Kunststoffteil erfolgen.

Die BiSn-Legierungen werden in der Regel in einer eutektischen Zusammensetzung (42 Gew.-% Sn / 58 Gew.-% Bi) eingesetzt. Sie zeichnen sich durch eine gute Giessbarkeit und geringen Schwund aus.

Bei bekannten Verfahren der Kernausschmelztechnik wird das Kunststoffteil nach Beschicken des Formwerkzeugs mit den Verstärkungsfasern und der Kunststoffmatrix, welche bsp. mit einer Temperatur von rund 110°C verarbeitet wird, bis Erreichen seiner Formstabilität verfestigt, ausgehärtet bzw. polymerisiert und anschliessend auf die Schmelztemperatur des Schmelzkerns von z.B. rund 140°C erwärmt. Dies geschieht bsp. in einem Flüssigkeitsbad, in welches der Schmelzkern ausgeschmolzen wird. Das Kunststoffteil enthält dabei mindestens eine Ausschmelzöffnung, durch welche der verflüssigte Schmelzkern nach aussen abgeführt werden kann.

Nach Abschluss des Ausschmelzprozesses wird das Kunststoffteil gereinigt und gleichzeitig abgekühlt. Die Reinigung geschieht beispielsweise mit warmem Wasser bei einer Temperatur von z.B. rund 60°C. In einem nachfolgenden Verfahrensschritt wird das Kunststoffteil einem Temperprozess zugeführt, in welchem dieses unter Wärmezufuhr auf die Temper-Temperatur von z.B. rund 145° erwärmt wird. Während des Temperns wird das Bauteil vollständig ausgehärtet und erhält dabei die gewünschten mechanischen Eigenschaften. Das Tempern wird bsp. in einem eigens dafür vorgesehenen Temper-Ofen durchgeführt.

Das bekannte Verfahren wie oben beschrieben zeichnet sich durch einen häufigen Temperaturwechsel zwischen Beschickung des Formwerkzeuges mit den Ausgangskomponenten, Aushärtung des Kunststoffes, Ausschmelzen des Schmelzkerns, Reinigen des Kunststoffteils und Tempern des Kunststoffteils aus.

Die oben beschriebene Temperaturführung mit zahlreichen Temperaturwechseln ist nicht besonders verfahrensökonomisch. Neben einem erhöhten Energieverbrauch wird auch der Herstellungsprozess durch die stetigen Temperaturwechsel verlangsamt und umständlicher.

Der Erfindung liegt deshalb die Aufgabe zugrunde, ein Herstellungsverfahren für faserverstärkte Kunststoffteile vorzugschlagen, welches eine verbesserte Temperaturführung aufweist, die einerseits zu einer Energieeinsparung führt und andererseits den Prozessverlauf vereinfacht und beschleunigt.

Erfindungsgemäss wird die Aufgabe dadurch gelöst, indem der Schmelzkern im Anschluss an das Entformen ausgeschmolzen und das Kunststoffteil getempert wird, wobei die thermische Energie im Kunststoffteil und im Schmelzkern vom jeweils vorangehenden Prozessschritt im wesentlichen erhalten und in den nächsten Prozessschritt mitgeführt wird.

Die Prozesstemperatur des Kunststoffteils und des Schmelzkerns wird bei den jeweils aufeinander folgenden Prozessschritten zwischen dem Aushärten des Kunststoffteils vor seiner Entformung und dem Beginn des Temperprozesses bevorzugt im wesentlichen konstant gehalten oder erhöht. Die Temperaturführung gemäss vorliegender Erfindung weist somit keine sich gegenseitig abwechselnden Abkühlund Aufheizzyklen auf, sondern ist vielmehr von einer gewissen Kontinuität gekennzeichnet. D.h. die Temperatur ist entweder überwiegend konstant gehalten oder steigt an. Stärkere Abkühlphasen der Kunststoffbauteile bzw. deren Schmelzkerne sind dabei nicht vorgesehen, wobei eine verhältnismässig geringfügige Abkühlung durch den Transport des Kunststoffteils zwischen der Ausführung zweier aufeinanderfolgender Verfahrensschritte nicht auszuschliessen ist.

Durch die oben beschriebene Temperaturführung wird ein minimales Temperaturniveau beibehalten, welches in etwa der Entformungstemperatur entspricht oder nur unwesentlich darunter liegt. Dadurch wird die Restwärme aus dem Formgebungsprozess in den Temper- bzw. Kernausschmelzprozess mitgenommen, was letzten Endes eine deutliche Energieeinsparung bedeutet.

Die Prozesstemperatur des Kunststoffteils und des Schmelzkerns nimmt zwischen dem Aushärten des Kunststoffteils vor seiner Entformung und dem Beginn des Temperprozesses bevorzugt höchstens um 25°C, vorteilhaft höchstens um 15°C und insbesondere höchstens um 5°C ab.

Das Ausschmelzen des Schmelzkerns wird bevorzugt vor, zu Beginn und/oder während des Temperns durchgeführt. Die zum Ausschmelzen des Schmelzkerns eingesetzte thermische Energie dient in bevorzugter Ausführung des Verfahrens gleichzeitig zum Tempern des Bauteils.

Das Ausschmelzen des Schmelzkerns und das Tempern des Kunststoffteils wird bevorzugt in einem Temperofen durchgeführt. Der Temperofen kann zum Beispiel ein Durchlaufofen sein. Im Temperofen können bsp. Mittel zum Beheizen des Kunststoffteils mit erwärmter Umluft vorgesehen sein.

Der Ofen wird bsp. mittels einer Widerstandsheizung und vorzugsweise mittels Induktions-Heizung betrieben. Das induktive Ausschmelzen des Schmelzkerns erfolgt verfahrensbedingt bei niedrigeren Temperaturen und in kürzerer Zeit als das Kernausschmelzen mittels Widerstandsheizung, wodurch die Temperaturbelastung des Kunststoffteil gesenkt werden kann. Das Induktionsfeld kann erzeugt werden, indem ein offene oder geschlossene Spule das Kunststoffteil mit Schmelzkern teilweise oder vollständig umgreift.

In bevorzugter Ausführung der Erfindung wird mit der zur Erwärmung des Schmelzkerns auf seine Schmelztemperatur zwecks Einleitung der Kernausschmelzung eingebrachten thermischen Energie gleichzeitig das Kunststoffteil von innen beheizt, d.h. die dem Schmelzkern zugeführte thermische Energie dient gleichzeitig zum Tempern des Kunststoffteils. Der Schmelzkern wird zu diesem Zweck bevorzugt mittels Induktions-Heizung auf seine Schmelztemperatur erwärmt.

Das Kunststoffteil enthält zweckmässig eine oder mehrere Öffnungen, welche dem Ausschmelzen des Kernmaterials und/oder der Luftzufuhr während des Ausschmelzens dienen. Die Öffnungen werden bevorzugt nach der Entformung des Kunststoffteils und vor Einleiten des Ausschmelzvorganges eingebracht.

Es kann vorgesehen sein, dass die Öffnung(en) im Kunststoffteil, und insbesondere die Auslassöffnung(en), welche dem Ausschmelzen dienen, vor Beginn des Aufschmelzvorganges verschlossen werden, so dass das geschmolzene Schmelzkernmaterial im Hohlraum zurückbehalten wird, d.h. verzögert abgelassen wird.

Dies dient einerseits einer optimierten Temperung des Kunststoffteils, indem dieses durch Wärmeübergang vom Schmelzkern auf das Kunststoffteil auch von innen erwärmt wird. Ferner wird durch Zurückbehalten des Schmelzkerns bis zum Erreichen seines (vollständigen) schmelzflüssigen Zustandes eine bessere induktive Erwärmung und somit eine kürzere Ausschmelzzeit erreicht, als wenn die Schmelze kontinuierlich ausfliessen kann und der Schmelzkern vom Rand her ab- und ausgeschmolzen wird.

Die Verflüssigung des Schmelzkerns kann mittels eines Senors, welcher bsp. auf einem Thermoelement basiert, überwacht werden, so dass das Erreichen der vollständigen Verflüssigung des Schmelzkerns durch den Sensor erfasst und angezeigt wird und die Auslassöffnungen entsprechend geöffnet werden können. In bevorzugter Ausführung der Erfindung wird also der Schmelzkern erst mit dem oder nach dem vollständigen Aufschmelzen aus dem Hohlraum abgeführt.

Das Kunststoffteil wird nach Abschluss des Temperns zweckmässig abgekühlt. Ferner wird nach Abschluss des Temperns das Kunststoffteil vorzugweise gereinigt (Hohlraumreinigung), wobei Reste des Schmelzkerns aus dem Hohlraum entfernt werden. Das Kunststoffteil kann bsp. chemisch, d.h. mittels Einsatz geeigneter Lösungsmittel, gereinigt werden.

Das Reinigen kann auch durch Auswaschen mit Wasser, insbesondere mittels Wasserdampf, oder einer anderen geeigneten Waschflüssigkeit, wie z.B. Glukol, erfolgen.

Das Kunststoffteil kann auch mechanisch, bsp. durch Ausblasen des Kunststoffteils mittels Druckluft, insbesondere erwärmter bzw. heisser Druckluft, oder aber durch Thermoschock in flüssigem Gas, wie z.B. Stickstoff, geschehen. Chemische und mechanische Reinigungsstufen können ferner miteinander kombiniert werden.

Die Schmelzkern-Legierung kann neben den Legierungsbestandteilen zusätzliche Additive (z.B. weitere Legierungselemente) enthalten, welche so ausgelegt sein können, dass sie die Oberflächenspannung und/oder die Viskosität der Schmelze erhöhen und dadurch die Benetzung herabsetzen. Vor der Bauteilherstellung können auch Trennmittel auf die Schmelzkerne aufgetragen werden, welche die Benetzung deutlich reduzieren und einen sogenannten Lotus-Effekt bewirken. Dies können bekannte Formtrennmittel aus der Kunststoff- oder Metallverarbeitung, z.B. auf Basis von Graphit, Bornitrit oder Silikon, sein.

Durch die Verwendung entsprechend geeigneter Additive oder Trennmittel, wie oben beschrieben, kann unter Umständen auf einen abschliessenden Reinigungsschritt verzichtet, oder aber dieser zumindest reduziert werden.

Das erfindungsgemässe Verfahren zur Herstellung eines faserverstärkten, insbesondere langfaserverstärkten, Kunststoffteils mittels Kernausschmelztechnik kann mittels verschiedener Formgebungsverfahren ausgeführt werden. Mit Formgebungsverfahren ist jenes Verfahren bzw. Teilverfahren gemeint, welches das Bereitstellen der Fasergebilde und der Ausgangskomponenten des Kunststoffmatrixsystems sowie des Schmelzkerns, das Beschicken eines dazughörigen Formwerkzeugs mit den genannten Komponenten sowie den Formgebungsprozess bis zur Entformung des formstabilen Kunststoffteils aus dem Formwerkzeug umfasst.

Das Formgebungsverfahren ist bevorzugt ein sogenanntes LCM (Liquid Composite Moulding)-Verfahren. Unter LCM-Verfahren oder LCM-Technologie wird in diesem Text ein Verfahren verstanden, in welchem der Hohlraum eines mehrteiligen Formwerkzeugs, insbesondere eines zweiteiligen Formwerkzeugs, mit einem ein- oder mehrteiligen Faserrohling oder Fasergebilde beschickt wird und in den Hohlraum des geschlossenen Formwerkzeugs ein duro- oder thermoplastisches Kunststoffmatrix-System eingespeist bzw. injiziert wird, welche den Faserrohling unter Ausbildung eines Faserverbundteils durchfliesst und den Hohlraum des Formwerkzeuges füllt, und das Faserverbundteil nach Abschluss der Formfüllung zur Aushärtung bzw. Polymerisation gebracht und entformt wird.

Ein duroplastisches Kunststoffmatrix-System kann ein Epoxidharz umfassen, welches sich im Aushärtungsprozess zu einem duroplastischen Kunststoff vernetzt. Ein thermoplastisches Kunststoffmatrix-System kann bsp. zyklische Oligomere umfassen, welche sich in einem Polymerisationsprozess zu einem PBT (Polyethylenterephthalat) vernetzen. Ferner kann die thermoplastische Kunststoffmatrix auch ein Polyester oder ein PA (Polyamid) sein.

Wird ein duroplastisches Kunststoffmatrix-System im LCM-Verfahren verarbeitet, so handelt es sich in diesem Fall um ein sogenanntes RTM-(Resin Transfer Moulding)-Verfahren, auch Harz-Fliessform-Verfahren genannt. Das RTM-Verfahren zeichnet sich dadurch aus, dass ein niedrigviskoses Reaktionsharz in ein mit Verstärkungsfasern beschicktes Formwerkzeug injiziert und nachfolgend zu einem Duroplast ausgehärtet wird. Das RTM-Verfahren ist beispielsweise in Kötte, "Der Resin-Transfer-Molding-Prozess - Analyse eines Harzinjektionsverfahrens", Verlag TÜV Rheinland, 1991 ausführlich beschrieben.

Das LCM-Verfahren versteht sich somit als eine dem RTM-Verfahren übergeordnete Bezeichnung für ein eingangs beschriebenes Verfahren, in welchem neben duroplastischen Kunststoffmatrixsystemen auch thermoplastische Kunststoffmatrixsysteme verarbeitet werden.

Das erfindungsgemässe Verfahren kann anstelle eines LCM- oder RTM-Verfahren auch ein anderes, Langfasern verarbeitendes Formgebungsverfahrens, wie Formpressen, beinhalten. So kann das Formgebungsverfahren sich auch durch die Verarbeitung von vorgetränkten Fasergebilde bzw. Faserhalbzeuge, wie SMC-(Sheet-Moulding-Compound)-Formmassen, GMT-(Glass Matt Thermoplastic)-Halbzeug oder Prepregs, auszeichnen.

Das Kunststoffteil ist bevorzugt mit vorgefertigten Fasergebilden verstärkt. Die Fasergebilde können in Form von textilen Flächengebilden, z.B. Vliese, "Nonwovens", nicht-maschenbildenden Systemen, wie Gewebe, uni- oder bidirektionale Gelege, Geflechte oder Matten oder maschenbildenden Systemen, wie Gestricke oder Gewirke sowie als gestickte Strukturen vorliegen. Die verwendeten Fasern sind vorzugsweise Langfasern mit Faserlängen von z.B. 3-150 mm oder Endlosfasern.

Die Verstärkungsfasern des Kunststoffteils können Glasfasern, Kohlenstofffasern, Aramidfasern oder Gemische davon sein. Weitere Faserntypen aus Kunststoff oder Naturfasern können ebenfalls Verwendung finden. Das Kunststoffteil enthält bsp. einen Fasergehalt von über 30 Vol.-%, und vorteilhaft einen Fasergehalt von 40-70 Vol.-%.

Das Kunststoffteil besteht bsp. aus einem thermoplastischen oder duroplastischen Kunststoff. In bevorzugter Ausführung der Erfindung besteht das Kunststoffteil aus einem thermoplastischen Kunststoff, insbesondere aus einem thermoplastischen Kunststoff, welcher zur Verarbeitung in einem LCM-Verfahren geeignet ist. Das Kunststoffteil besteht insbesondere aus einem Poly(butylenterephthalat)-(PBT)-oder Polyamid-(PA)-Polymersystem, wie Polyamid-12 (PA12).

Bei der Verarbeitung von PBT-Matrixsystemen, wird das reaktive Matrixmaterial vorzugsweise in Form von mit einem Polymerisations-Katalysator vermischten zyklischen oder makrozyklischen Oligomeren des Polyesters bzw. des PBT (CPBT) in das Formwerkzeug injiziert.

In bevorzugter Ausführung wird der Schmelzkern vor, während oder nach dem Beschicken des Formwerkzeugs, jedoch vor der Einspeisung der reaktiven Kunststoffmatrix, auf eine unter dem Schmelzpunkt liegende Temperatur vorgewärmt. Vorwärmen bedeutet, den Schmelzkern auf ein Temperaturniveau zu bringen, welches über der herrschenden Umgebungstemperatur liegt. Hierzu kann auch die aus dem Giessprozess verbleibende Restwärme des erstarrten Schmelzkerns genutzt werden.

Die Erfindung betrifft auch eine Vorrichtung zur Herstellung von faserverstärkten, insbesondere langfaserverstärkten, Kunststoffteilen mittels Kernausschmelztechnik nach dem erfindungsgemässen Verfahren.

Die erfindungsgemässe Vorrichung zeichnet durch einen Temperofen zur Temperung des Kunststoffteils aus, welcher in Ausführung eines Durchlaufofens vorliegt.

Der Temperofen wird bevorzugt mittels Heissluftumwälzung beheizt. Der Temperofen kann z.B. mittels Widerstandsheizung betrieben werden.

Ferner kann die Vorrichtung Mittel zur induktiven Beheizung (z.B. Magnet-Induktion) des Schmelzkerns umfassen. Die Mittel zur induktiven Beheizung des Schmelzkerns sind bevorzugt im Temperofen integriert, d.h. sie sind bevorzugt integraler Bestandteil des Temperofens. In einer spezifischen Ausführung eines erfindungsgemässen Temperofens enthält dieser sowohl mittel zur induktiven Beheizung des Schmelzkerns und des Kunststoffteils von innen als auch Mittel zur Beheizung des Kunststoffteils von aussen, bsp. mittels Heissluftumwälzung oder Infrarot.

Die Schmelzkerne sind bevorzugt aus niedrigschmelzenden Metallegierungen, wobei die Schmelztemperatur der Metallegierung zwischen der Injektionstemperatur und der Glastemperatur des jeweils zu verarbeitenden Kunststoffmatrixsystems liegen muss.

Zur Verarbeitung von Duroplast-Matrixsystemen, welche in der Regel bei einer Temperatur von rund 100 bis 110° C verarbeitet und bei einer Temperatur von rund 140 bis 150°C getempert werden, eignen sich Bismut-Zinn-Legierungen, wie Bi42Sn, welche eine Schmelztemperatur von rund 139°C aufweist. Ferner eignen sich auch die nachfolgend beschriebenen Antimon-haltigen Bismut-Zinn-Legierungen gemäss Erfindung, deren Schmelztemperatur ebenfalls im Bereich von rund 140°C liegt. Weitere anwendbare Legierungen sind Bismut-Blei-Legierungen, wie z.B. Bi45Pb, welche eine Schmelztemperatur von 124°C aufweist.

Zur Verarbeitung von Thermoplast-Matrixsystemen, wie z.B. PBT oder PA-12, welche wesentlich höhere Verarbeitungstemperaturen von z.B. 180 bis 190°C und Tempertemperaturen von z.B. 200 bis 210°C aufweisen, eignen sich Zinn-Zink-Legierungen, wie Sn9Zn, mit einem gegenüber Bismut-Zinn-Legierungen höheren Schmelzpunkt im Bereich von rund 199°C. Den SnZn-Legierungen können zur Festigkeitssteigerung ebenfalls geringe Anteile von Antimon in Mengen von weniger als 4 Gew-%, vorzugsweise von wengier als 2 Gew-%, und insbesondere von weniger als 1 Gew-% zugegeben werden.

Weitere Legierungen sind Zinn-Blei-Legierungen, wie z.B. SnPb, welche eine Schmelztemperatur von ca. 183°C aufweist. Ferner sind auch Zinn-Magnesium-Legierungen anwendbar, wie z.B. Sn2Mg, welche eine Schmelztemperatur von ca. 200°C aufweist.

Die im Kernausschmelzverfahren verwendeten Schmelzkerne werden vorzugsweise mittels eines Schwerkraftgiessverfahrens, z.B. im Kokillenguss, wie Schwerkraft-Kokillenguss, oder im Sandguss hergestellt. Diese Verfahren sind mit Abstand am kostengünstigsten und gut handhabbar. Die Schmelzkerne können jedoch auch mittels eines Niederdruckgussverfahrens, z.B. mittels Niederdruck-Kokillenguss, Niederdruck-Sandguss oder Druckguss bzw. Squeeze-Casting hergestellt werden.

Das Material wird dazu in einem Schmelzofen aufgeschmolzen bzw. in einem Warmhalteofen zum Vergiessen bereit gehalten. Das aus recyclierten, d.h. ausgeschmolzenen, Schmelzkernen rückgeführte Material wird bevorzugt in einem Warmhalteofen zum Vergiessen in flüssiger Form bereit gehalten. Es ist jedoch auch möglich, das recyclierte Material in verfestigter Form einem Schmelzofen zuzuführen und dann zu vergiessen.

Fallweise findet im Schmelzofen die Gattierung der Legierungszusammensetzung statt. Ferner kann im Schmelz- bzw. Warmhalteofen eine Reinigung der recyclierten Schmelze stattfinden.

Es ist denkbar, dass der Schmelzbetrieb mit Schmelz- bzw. Warmhalteofen, in welchem die rückgeführte bzw. das neu produzierte Schmelzkern-Material gereinigt bzw. aufbereitet wird, vom Giessbetrieb getrennt geführt wird, wobei der Giessbetrieb neben einer Giessvorrichtung auch einen Giessofen umfasst.

In bevorzugter Ausführung der Erfindung wird die recyclierte Schmelze nach entsprechender Reinigung und Aufbereitung direkt und ohne vorangehendes Erstarren zu neuen Schmelzkernen vergossen. Die Aufbereitungs- bzw. Reinigungsstufe und der Giessbetrieb sind zwecks Vermeidung grosser Transportwege und entsprechender Energieverluste vorzugsweise unmittelbar nebeneinander angeordnet.

Nach Erstarrung des Gusskörpers wird dieser entformt und das Angusssystem entfernt. Ferner wird der Gusskörper entgratet und gereinigt. Das Entgraten kann bsp. in einer Entgratpresse ausgeführt werden. Die Entgrateten und gereinigten Schmelzkerne werden nachfolgend bsp. in eine Lagereinrichtung zur Zwischenlagerung oder zum Formwerkzeug direkt zwecks Herstellung eines Kunststoffteils ) weitertransportiert.

Die Gussformen sind bevorzugt aus Stahl, Aluminium oder einer Aluminiumlegierung oder aus einem Grauguss (GGL, GGV, GGG), insbesondere aus einem Gusseisen mit Lamellengraphit. Die Gussform kann jedoch auch aus einem Kunststoff sein.

Die mittels erfindungsgemässen Verfahren hergestellten Kunststoffteile sind bevorzugt Konstruktions-Bauteile, insbesondere Strukturbauteile. Die Kunststoffbauteile finden z.B. Verwendung im Strassen- oder Schienenfahrzeugbau, in der Luft- und Raumfahrt, sowie im Wasserfahrzeugbau, wie Bootsbau. Weitere Anwendungsgebiete der mit erfindungsgemässem Verfahren hergestellten Kunststoffteile sind Sportgeräte für z.B. Wassersport, Radsport, Flugsport oder Tennissport. Femer können die Kunststoffteil auch im Hoch-, Tiefbau oder Innenausbau Verwendung finden.

So lassen sich beispielsweise faserverstärkte Kunststoffbauteile als Knotenteile in Ausbildung eines Hohlkörpers zur Anbindung einer B-Säule an den Schweller eines PKW's mit dem erfindungsgemässen Verfahren herstellen. Auch Flüssigkeitsbehälter mit grossen Hohlräumen lassen sich auf diese Weise wirtschaftlich herstellen.

Die Kunststoffteile können ferner neben den durch die Schmelzkerntechnik erzeugten Hohlkammern auch permanente Kerne, wie Schaumstoffkerne, enthalten. Dazu werden zur Herstellung der besagten Kunststoffteile neben Schmelzkernen auch permanente Kerne in das Formwerkzeug eingelegt.

Die Erfindung betrifft überdies auch einen Schmelzkern zur Herstellung von faserverstärkten Kunststoffteilen im Schmelzkernverfahren, bestehend aus einer Metalllegierung enthaltend Bismut (Bi) und Zinn (Sn).

Schmelzkerne aus Metall weisen gegenüber den ebenfalls häufig eingesetzten Wachs-Schmelzkernen den Vorteil auf, dass diese Druck- und Temperaturbeständiger sind. Insbesondere bei Injektionsverfahren, in welchen das Harz mit hohen Drücken in das Formwerkzeug injiziert wird, erweisen sich Wachskerne als zu weich, was dazu führen kann, dass das Wachs in die Fasergebilde gedrückt wird.

Schmelzkerne aus Metall werden als sogenannte Vollkerne gegossen. Bei der Herstellung von Kunststoffteilen, welche grossvolumige Schmelzkerne benötigen, ergeben sich daher logistische Probleme, da einerseits die grossen und entsprechend schweren Schmelzkerne umständlich zu handhaben sind und insbesondere in automatisierten Prozessabläufen zu Problemen führen können.

Ferner wird beim Einsatz von grossvolumigen Vollkernen ein enormer Materialfluss in Gang gesetzt, welcher den Prozessablauf umständlich macht und verlangsamt sowie einen hohen Energieverbrauch nach sich zieht. Zudem sind niedrigschmelzende Metallegierungen, wie SnBi, relativ teuer, so dass ein möglichst geringer Materialeinsatz erwünscht ist. Es ist daher das Ziel, Schmelzkerne mit einer vorgegebenen Aussenkontur unter Verwendung von möglichst wenig Legierungsmaterial herzustellen.

Zur Lösung dieses Problems schlägt die DE 37 24665 A1 vor, den Schmelzkern mit Füllkörpern, wie z.B. Hohlkörpern aus Glas, zu vergiessen, welche ensprechend Volumen einnehmen und beim Ausschmelzen des Kerns durch Zerstören aus dem Inneren des Kerns entfernt werden.

Diese Lösung ist jedoch unbefriedigend, da einerseits artfremde Materialen verwendet werden, welche bei der Aufbereitung der Schmelze wieder entfernt werden müssen. Zudem bedeuted die Herstellung und Einarbeitung solcher Füllmaterialien in den Schmelzkern einen zusätzlichen Aufwand.

Bei grossvolumigen Schmelzkernen bietet es sich daher an, diese als Hohlkerne zu fertigen. Da SnBi-Legierungen jedoch verhältnismässig geringe Festigkeiten aufweisen, müssen die Hohlkerne recht dickwandig hergestellt werden, damit der Schmelzkern angesichts der hohen Drücke, welche bei Injektionsverfahren zur Herstellung von Kunststoffteilen herrschen, formstabil ist. Der zur Herstellung von dickwandigen Hohlkörpern erforderliche Mehraufwand gegenüber Vollkernen kann jedoch durch die daraus erzielten Vorteile in der Regel nicht aufgewogen werden, so dass letztendlich der Einsatz von Vollkernen wirtschaftlicher ist.

Dünnwandige und daher leichte und materialsparende Hohlkörper aus reinen SnBi-Legierungen eignen sich wiederum wegen den viel zu geringen Festigkeiten nicht als Schmelzkerne.

Das Problem wird erfindungsgemäss nun dadurch gelöst, dass die Metallegierung des Schmelzkerns neben Zinn und Bismut als zusätzlichen Legierungsbestandteil Antimon (Sb) enthält.

Durch die Zugabe von Antimon steigert sich die Festigkeit der Metalllegierung, so dass daraus Schmelzkerne in Form von Hohlkörpern, insbesondere dünnwandigen Hohlkörpern, von hoher Festigkeit hergestellt werden können. Die Zugabe von Antimon bewirkt dabei eine Steigerung der Festigkeit durch Mischkristallhärtung.

Die erfindungsgemässe Metallegierung besteht bevorzugt aus Zinn, Bismut und Antimon sowie den üblichen Verunreinigungen, welche vorzugsweise möglichst gering zu halten sind. solche Verunreinigungen können bsp. Blei (Pb) oder Zink (Zn) sein, welche in Mengen von 66 ppm bis 0.01 Gew.-% vorliegen.

Die Schmelzkern-Legierung enthält beispielsweise mehr als 0 Gew.-%, vorzugsweise 0.01 Gew.-% oder mehr, insbesondere 0.03 Gew.-% oder mehr Antimon (Sb).

In spezifischer Ausführung der Erfindung enthält die Schmelzkern-Legierung 5 Gew.-% oder weniger, vorzugsweise 4 Gew.-% oder weniger, und insbesondere 2 Gew.-% oder weniger Antimon (Sb).

Der Legierungsanteil an Zinn kann bsp. zwischen 30 und 55 Gew.-% liegen. Die Schmelzkern-Legierung enthält bsp. 30 Gew.-% oder mehr, vorzugsweise 35 Gew.-% oder mehr, insbesondere 40 Gew.-% oder mehr Zinn (Sn). Die Schmelzkern-Legierung enthält bsp. 55 Gew.-% oder weniger, vorzugsweise 50 Gew.-% oder weniger, insbesondere 45 Gew.-% oder weniger Zinn (Sn).

Der Legierungsanteil an Bismut kann bsp. zwischen 45 und 70 Gew.-% liegen. Die Schmelzkern-Legierung enthält bsp. 45 Gew.-% oder mehr, vorzugsweise 50 Gew.-% oder mehr, insbesondere 55 Gew.-% oder mehr Bismut (Bi). Die Schmelzkern-Legierung enthält bsp. 70 Gew.-% oder weniger, vorzugsweise 65 Gew.-% oder weniger, insbesondere 60 Gew.-% oder weniger Bismut (Bi).

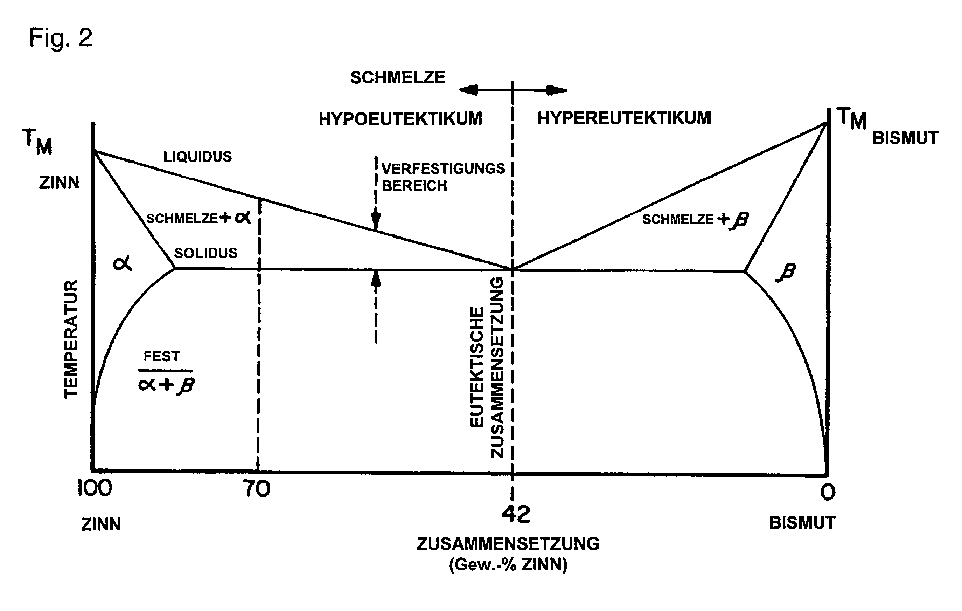

In besonders bevorzugter Ausführung der Erfindung enthält die Schmelzkern-Legierung 53 bis 63 Gew.-%, vorzugsweise 57 bis 59 Gew.-% Bismut und 37 bis 47 Gew.-%, vorzugsweise 41 bis 43 Gew.-% Zinn. Die Zusammensetzung von Bismut und Zinn liegt insbesondere in der Nähe des Eutektikums (42 Gew.-% Sn / 58 Gew.-% Bi) (Fig. 2).

So weist beispielsweise eine eutektische Bismut-Zinnlegierung mit Antimonzusatz, bsp. von 400 bis 600 ppm vielversprechende mechanische Eigenschaften auf.

Die oben aufgeführten Legierungsangaben schliessen die üblichen Verunreinigungen, wie bereits genannt, mit ein. Der erfindungsgemässe Schmelzkern kann ferner weitere nichtmetallische Zusätze und/oder Füllmaterial enthalten.

Die erfindungsgemässe Schmelzkern-Legierung eignet sich zur Herstellung von Schmelzkernen in Form von Vollkernen und vorzugsweise Hohlkernen, insbesondere dünnwandigen Hohlkernen. Die Hohlkerne können integral, d.h. einstückig, gegossen werden. Ferner können die Hohlkerne auch als Teilschalen, insbesondere Halbschalen, gegossen und anschliessend, gefügt werden. Der Hohlraum der Hohlkerne bzw. Teilschalen kann zur Verstärkung des Kern mittels Verbindungsstegen in eine Mehrzahl von Kammern bzw. Taschen unterteilt sein.

Das Fügen kann durch Stoffschluss, z.B. mittels Schweissen, Löten, Kleben oder durch Formschluss erfolgen. Das Schweissverfahren kann bsp. ein TIG-Verfahren mit Wolframelektrode, mit oder ohne Zusatzwerkstoff, sein. Das TIG-Verfahren wird bevorzugt unter Inertgas ausgeführt. Ferner kann das Schweissen mittels Lötkolben, mit oder ohne Zusatzwerkstoff, erfolgen.

Die genannten Fügeverfahren können auch dazu dienen, beschädigte oder fehlerhafte Schmelzkerne zu reparieren.

Die Hohlkerne können auch als Einkammerkörper mit ein- oder zweiends offenen Endseiten, insbesondere Stirnseiten, gegossen werden, wobei in der Nachbearbeitung die offenen Endseiten mit einem Deckelement, vorzugsweise aus demselben Material, durch Schweissen, Löten, Kleben oder Formschluss geschlossen werden, so dass ein geschlossener Hohlkörper entsteht. Der Einkammerkörper kann beispielsweise rohrartig mit gleichbleibendem oder veränderlichem Querschnitt ausgebildet sein. Der genannte Hohlkörper kann auch Zwischenstege als Verstärkungen enhalten, welche gegebenenfalls den Hohlraum in mehrere Kammern oder Taschen unterteilen.

Ferner können komplexe Schmelzkerne aus mehreren Teilkernen zusammengesetzt sein, wobei die miteinander kombinierten Teilkerne Vollkerne und/oder Hohlkerne sein können. Die Teilkerne in Form von Hohlkernen können wie oben beschrieben wiederum aus Teilschalen zusammengesetzt sein. Die Teilkerne werden zweckmässig separat in getrennten Giessvorgängen gegossen und nachfolgend bsp. mittels Schweissen, Löten oder Kleben oder Formschluss zusammengefügt.

Die Verwendung von Hohl-Schmelzkernen erleichtert das Handling derselbigen, da die Schmelzkerne wesentlich leichter sind als Vollkerne. Dadurch werden automatisierte Prozessabläufe möglich bzw. vereinfacht, welche bsp. den Einsatz von Robotertechnik und/oder Transportbändern zwecks Verschieben der Schmelzkerne zwischen den verschiedenen Prozessstufen, wie z.B. zwischen Giessanlage und Formwerkzeug, sowie zwecks Einlegen von Schmelzkernen in das Formwerkzeug umfassen können. Ferner werden durch die Hohlbauweise die Stoffflüsse markant reduziert, so dass der Bedarf an teuren Legierungsbestandteilen zur Herstellung der Legierungen, aber auch die Materialverluste aus dem Stoffkreislauf reduziert werden können.

Der Antimon-Anteil einer BiSnSb-Legierung bewirkt eine Erhöhung der Schmelztemperatur gegenüber einer reinen BiSn-Legierung. Da der Antimon-Anteil erfindungsgemäss unterhalb weniger Gew.-% ist, liegt die Schmelztemperatur nicht bedeutend über der Schmelztemperatur reiner BiSn-Legierungen. Die Schmelztemperatur erfindungsgemässer BiSnSb-Legierungen liegt bsp. im Bereich von 135 bis 145°C. Erst bei einem Antimon-Anteil von rund über 8 Gew.-% steigt die Schmelztemperatur merklich an.

Die erfindungsgemässe Legierung erlaubt die Herstellung von verhältnismässig dünnwandigen Schmelzkerne, welche auch hohen (Injektions-) Drücken von 20 bar oder mehr, insbesondere von bis zu 50 bar stand halten, ohne selbst zum Nachteil des Kunststoffteils deformiert zu werden.

Der Einsatz hoher Injektionsdrücke wiederum erlaubt unter anderem die Herstellung von Kunststoffteilen mit hohem Fasergehalt von 40 bis 70% Vol-%, da durch die herrschenden hohen Drücke die Durchtränkung der (dichten) Fasergebilde gewährleistet ist. Ferner erlaubt der Einsatz hoher Injektionsdrücke auch eine Reduktion der Taktzeiten, da dadurch die Formfüllzeit herabgesetzt werden kann.

Die erfindungsgemässen Schmelzkerne werden vorzugsweise mittels eines Schwerkraftgiessverfahrens, z.B. im Kokillenguss, wie Schwerkraft-Kokillenguss, oder im Sandguss hergestellt. Diese Verfahren sind mit Abstand am kostengünstigsten und gut handhabbar. Die erfindungsgemässen Schmelzkerne können jedoch auch mittels eines Niederdruckgussverfahrens, z.B. mittels Niederdruck-Kokillenguss, Niederdruck-Sandguss oder Druckguss bzw. Squeeze-Casting hergestellt werden.

Die Gussformen sind bevorzugt aus Stahl, Aluminium oder einer Aluminiumlegierung oder aus einem Grauguss (GGL, GGV, GGG), insbesondere aus einem Gusseisen mit Lamellengraphit. Die Gussform kann jedoch auch aus einem Kunststoff sein.

In bevorzugter Ausführung des Verfahrens werden Transportbänder und/oder Robotertechnik zum Verschieben der Schmelzkerne und/oder der Kunststoffteile zwischen den einzelnen Prozessstufen, wie z.B. der Schmelzkerne zwischen Giesseinrichtung und Formwerkzeug und/oder der Kunststoffteile und Schmelzkerne zwischen Formwerkzeug und Temperofen bzw. der Kunststoffteile zwischen Temperofen und einer Lager- oder Nachbearbeitungseinrichtung sowie Robotertechnik zum Einlegen der Schmelzkerne und/oder zum Entformen des Kunststoffteils in das Formwerkzeug eingesetzt.

Im folgenden wird die Erfindung beispielhaft und mit Bezug auf die beiliegenden Zeichnungen näher erläutert. Es zeigen:
- Fig. 1:: ein Prozessdiagramm zum erfindungsgemässen Verfahren;
- Fig. 2:: ein Phasendiagramm einer BiSn-Legierung für Schmelzkerne gemäss Stand der Technik;
- Fig. 3:: Eigenschaftsdiagramm von BiSn-Legierungen mit verschiedenen Legierungszusätzen;
- Fig. 4:: ein Diagramm enthaltend Festigkeitswerte für verschiedene AntimonAnteile von BiSn-Legierungen.

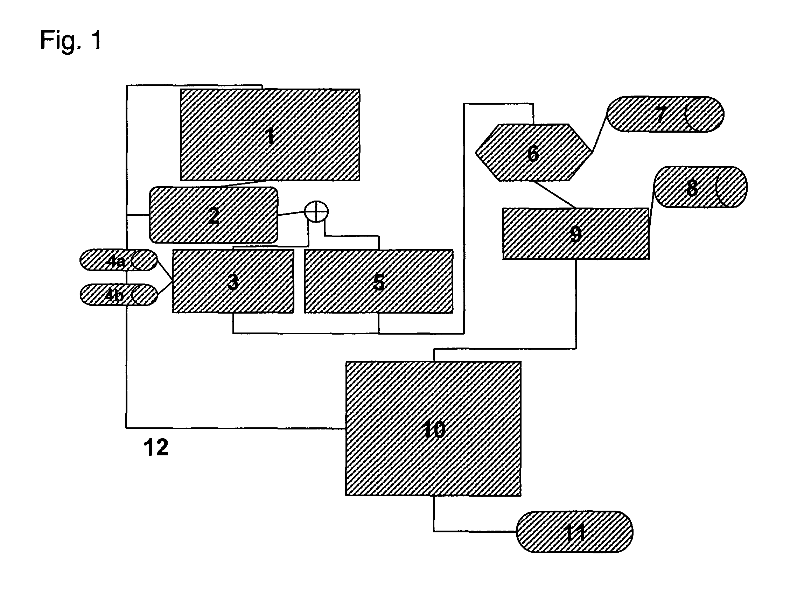

Das Diagramm gemäss Fig. 1 stellt einen schematischen Ablauf eines Fertigungsprozesses zur Herstellung von faserverstärkten Kunststoffteilen mittels Schmelzkerntechnik unter Anwendung eines RTM-Verfahrens dar.

Verfahrensschritt 1 umfasst das Aufschmelzen und Giessen des Schmelzkerns mittels Schwerkraftguss, wie Kokillen- oder Sandguss. In Schritt 2 erfolgt die Entformung des Gusskörpers, die Abtrennung des Angusssystems sowie die Entgratung und Reinigung des gegossenen Schmelzkerns.

Wird der Schmelzkern aus mehreren Teilkernen zusammengefügt, so werden die Kernteile entweder stoffschlüssig 3, z.B. mittels Kleben 4a oder Löten 4b, oder formschlüssig 5 gefügt. Der Schmelzkern kann ferner optional mit einem geeigneten Trennmittel beschichtet werden.

Der Schmelzkern 6 wird anschliessend mit Faserhalbzeug 7 belegt und in das Formwerkzeug 9 gelegt. Durch Injizieren eines Harzsystems 8 aus einem Harz und Härter wird im RTM-Verfahren bei einer Verfahrenstemperatur von rund 110°C das faserverstärkte Kunststoffteil hergestellt. Nach Erreichen der Formstabilität durch Aushärten wird das Kunststoffteil entformt und einem Temperofen 10 zugeführt, in welchem die abschliessende Aushärtung bei einer Temperatur von rund 145°C unter gleichzeitigem Ausschmelzen des Schmelzkerns erfolgt. Nach Abschluss des Temperns und gegebenenfalls nach einem abschliessenden Reinigungsschritt liegt das fertige Kunststoffteil 11 vor.

Das ausgeschmolzene Schmelzkernmaterial wird in einem geschlossenen Kreislauf 12 in den Giessprozess zurückgeführt.

Fig. 2 zeigt das Phasendiagramm einer BiSn-Legierung gemäss Stand der Technik. Bekannterweise eignet sich eine eutektische Legierungszusammensetzung mit 42 Gew.-% Sn besonders gut als Schmelzkernmaterial. Gemäss Erfindung erhält die Legierung zustätzlich einen vergleichsweise geringen Anteil an Antimon (Sb), wobei der Gehalt an Sn vorzugsweise bei rund 42 Gew.-% Sn liegt und der Antimon-Zusatz auf Kosten des Bismut-Anteils geht.

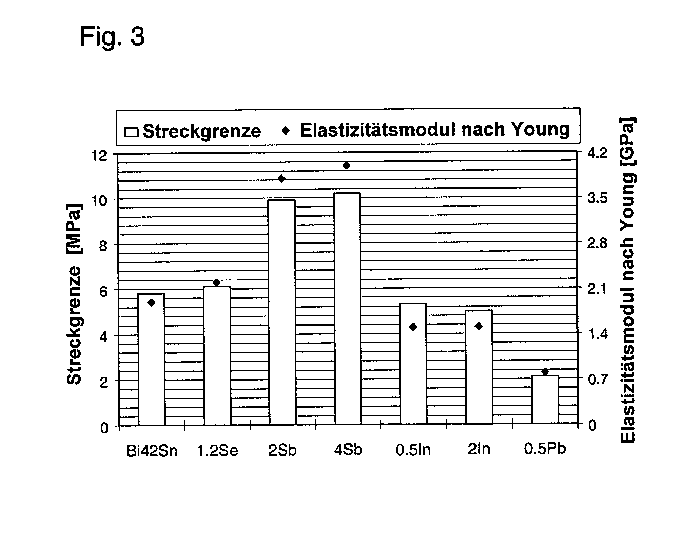

Fig. 3 zeigt mechanische Eigenschaften, wie Streckgrenze und Elastizitätsmodul von BiSn-Legierungen ohne bzw. mit unterschiedlichen Legierungszusätzen. Bei einem Legierungszusatz von 2 bzw. 4 Gew.-% Antimon wird im Vergleich zu reinen BiSn-Legierungen sowie zu BiSn-Legierungen mit Zusätzen an Selen, Indium oder Blei eine markante Steigerung der Festigkeit erreicht.

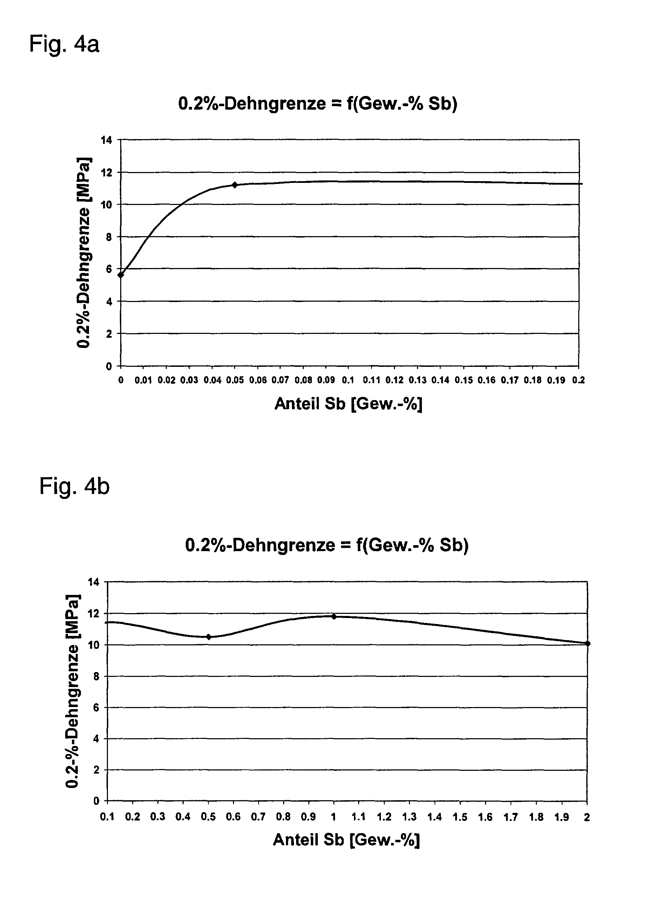

Fig. 4a und 4b zeigen 0.2%-Dehngrenzen von BiSnSb-Legierungen in Abhängigkeit des Antimon-Anteils in der Legierung. Fig. 4a zeigt, dass die genannte Dehngrenze ausgehend von einer reinen BiSn-Legierung mit zunehmendem Antimon-Anteil von bis zu 0.05 Gew.-% markant ansteigt und danach bei weiter steigendem Antimon-Anteil, abgesehen von gewissen Schwankungen, auf höherem Niveau verbleibt. Fig. 4b zeigt, dass die genannte Dehngrenze bei weiter steigendem Antimon-Anteil von bis zu 2 Gew.-% trotz gewisser Schwankungen auf höherem Niveau verbleibt aber auch nicht mehr bedeutend ansteigt. Die mechanischen Eigenschaften werden daher vor allem bei der Zugabe von bis zu 0.1 Gew.-% Antimon erheblich verbessert.

## Patentansprüche

1. Verfahren zur Herstellung eines faserverstärkten, insbesondere langfaserverstärkten, Kunststoffteils mittels Kernausschmelztechnik, wobei wenigstens ein Schmelzkern aus einer Metalllegierung in ein Formwerkzeug eingelegt und mit Verstärkungsfasern und einer die Verstärkungsfasern umgebenden Kunststoffmatrix ummantelt wird, und die Kunststoffmatrix verfestigt und das formstabile Kunststoffteil anschliessend entformt und der Schmelzkern ausgeschmolzen wird,
**dadurch gekennzeichnet, dass**
der Schmelzkern im Anschluss an das Entformen ausgeschmolzen und das Kunststoffteil getempert wird, wobei die thermische Energie im Kunststoffteil und im Schmelzkern vom jeweils vorangehenden Prozessschritt im wesentlichen erhalten und in den nächsten Prozessschritt mitgeführt wird.

2. Verfahren nach Anspruch 1, wobei die Prozesstemperatur des Kunststoffteils und des Schmelzkerns bei den jeweils aufeinander folgenden Prozessschritten zwischen dem Aushärten des Kunststoffteils vor seiner Entformung und dem Beginn des Temperprozesses im wesentlichen konstant gehalten oder erhöht wird.

3. Verfahren nach einem der Ansprüche 1 bis 2, wobei das Ausschmelzen des Schmelzkerns vor, zu Beginn und/oder während des Temperns durchgeführt wird, und die zum Ausschmelzen des Schmelzkerns eingesetzte thermische Energie gleichzeitig zum Tempern des Kunststoffteils dient.

4. Verfahren nach einem der Ansprüche 1 bis 3, wobei das Ausschmelzen des Schmelzkerns und das Tempern des Kunststoffteils in einem Temperofen in Ausführung eines Durchlaufofens durchgeführt wird.

5. Verfahren nach einem der Ansprüche 1 bis 4, wobei das Kunststoffteil im Temperofen mittels Umluft beheizt wird.

6. Verfahren nach einem der Ansprüche 1 bis 5, wobei die zur Erwärmung des Schmelzkerns auf seine Schmelztemperatur zwecks Einleitung der Kernausschmelzung eingebrachte thermische Energie das Kunststoffteil von innen beheizt und diese zugeführte thermische Energie gleichzeitig zum Tempern des Kunststoffteils dient.

7. Verfahren nach einem der Ansprüche 1 bis 6, wobei der Schmelzkern mittels Induktion auf seine Schmelztemperatur erwärmt wird.

8. Verfahren nach einem der Ansprüche 1 bis 7, wobei das Kunststoffteil nach Abschluss des Temperns abgekühlt wird.

9. Verfahren nach einem der Ansprüche 1 bis 8, wobei das Kunststoffteil nach Abschluss des Temperns chemisch und/oder physikalisch gereinigt wird.

10. Verfahren nach einem der Ansprüche 1 bis 9, wobei das Herstellungsverfahren ein Harz-Fliessform-Verfahren (Resin Transfer Moulding, RTM-Verfahren) ist und die Kunststoffmatrix des Kunststoffteils ein Duroplast ist, welche durch Injizieren eines Reaktionsharzes in das Formwerkzeug hergestellt wird.

11. Verfahren nach einem der Ansprüche 1 bis 9, wobei das Herstellungsverfahren ein LCM-(Liquid Composite Moulding)-Verfahren ist und die Kunststoffmatrix des Kunststoffteils ein Thermoplast ist, welche durch Injizieren eines schmelzflüssigen, niedrigviskosen, reaktiven Ausgangsstoffes, wie zyklische Oligomere, in das Formwerkzeug hergestellt wird.

12. Verfahren nach einem der Ansprüche 1 bis 11, wobei der Schmelzkern auf giesstechnischem Wege, vorzugsweise mittels Schwerkaft-Kokillenguss oder Sandguss hergestellt wird.

13. Verfahren nach einem der Ansprüche 1 bis 12, wobei der Schmelzkern vor Ausführen des LCM-Verfahrens mit einem Trennmittel beschichtet wird.

14. Vorrichtung zur Herstellung von faserverstärkten, insbesondere langfaserverstärkten, Kunststoffteilen mittels Kernausschmelztechnik nach dem Verfahren gemäss Anspruch 1,
**dadurch gekennzeichnet, dass**
die Vorrichtung einen Temperofen zur Temperung des Kunststoffteils in Ausführung eines Durchlaufofens umfasst.

15. Vorrichtung nach Anspruch 14, wobei der Temperofen mittels Luftumwälzung beheizt wird.

16. Vorrichtung nach einem der Ansprüche 14 bis 15, wobei die Vorrichtung Mittel zur induktiven Beheizung des Schmelzkerns umfasst.

17. Vorrichtung nach einem der Ansprüche 14 bis 16, wobei die Mittel zur induktiven Beheizung des Schmelzkerns im Temperofen integriert sind.

18. Schmelzkern zur Herstellung von faserverstärkten Kunststoffteilen im Schmelzkernverfahren, bestehend aus einer Metallegierung enthaltend Bismut (Bi) und Zinn (Sn),
**dadurch gekennzeichnet, dass**
die Legierung zusätzlich Antimon (Sb) enthält.

19. Schmelzkern nach Anspruch 18, wobei die Legierung mehr als 0 Gew.-%, vorzugsweise 0.01 Gew.-% oder mehr, insbesondere 0.03 Gew.-% oder mehr Antimon (Sb) enthält.

20. Schmelzkern nach einem der Ansprüche 18 bis 19, wobei die Legierung 5 Gew.-% oder weniger, vorzugsweise 4 Gew.-% oder weniger, und insbesondere 2 Gew.-% oder weniger Antimon (Sb) enthält.

21. Schmelzkern nach einem der Ansprüche 18 bis 20, wobei die Legierung 30 Gew.-% oder mehr, vorzugsweise 35 Gew.-% oder mehr, insbesondere 40 Gew.-% oder mehr Zinn (Sn) enthält.

22. Schmelzkern nach einem der Ansprüche 18 bis 21, wobei die Legierung 55 Gew.-% oder weniger, vorzugsweise 50 Gew.-% oder weniger, insbesondere 45 Gew.-% oder weniger Zinn (Sn) enthält.

23. Schmelzkern nach einem der Ansprüche 18 bis 22, wobei die Legierung 45 Gew.-% oder mehr, vorzugsweise 50 Gew.- % oder mehr, insbesondere 55 Gew.-% oder mehr Bismut (Bi) enthält.

24. Schmelzkern nach einem der Ansprüche 18 bis 23, wobei die Legierung 70 Gew.-% oder weniger, vorzugsweise 65 Gew.-% oder weniger, insbesondere 60 Gew.-% oder weniger Bismut (Bi) enthält.

25. Schmelzkern nach einem der Ansprüche 18 bis 24, wobei die Legierung 53 bis 63 Gew.-%, vorzugsweise 57 bis 59 Gew.-% Bismut und 37 bis 47 Gew.-%, vorzugsweise 41 bis 43 Gew.-% Zinn enthält.

26. Schmelzkern nach einem der Ansprüche 18 bis 25, wobei der Schmelzkern ein Hohlkern ist.

27. Schmelzkern nach einem der Ansprüche 18 bis 26, wobei der Schmelzkern nichtmetallische Zusätze und/oder Füllmaterial enthält.
